# EUROPEAN PATENT SPECIFICATION

(11) **EP 1 341 692 B1**
(45) Date of publication and mention of the grant of the patent: **20.09.2006**
(21) Application number: 01270453.2
(22) Date of filing: 14.12.2001
(51) Int. Cl.: B62M 3/00

(54) **BICYCLE CRANK**
FAHRRADKURBEL
PEDALIER DE BICYCLETTE

(30) Priority: 15.12.2000 DK 200001881
(43) Date of publication of application: 10.09.2003
(73) Proprietor: Body Bike International APS, 9900 Frederikshavn (DK)
(72) Inventor: NIELSEN, Mogens, DK-9900 Frederikshavn (DK)
(74) Representative: Gregersen, Niels Henrik
(86) International application number: PCT/DK2001/000829
(87) International publication number: WO 2002/047964

(56) References cited:
- US-A- 5 809 844
- US-A- 5 941 135
- US-A- 6 116 114

## Description

The present invention relates to a bicycle crank of the kind mentioned in the introduction of claim 1.

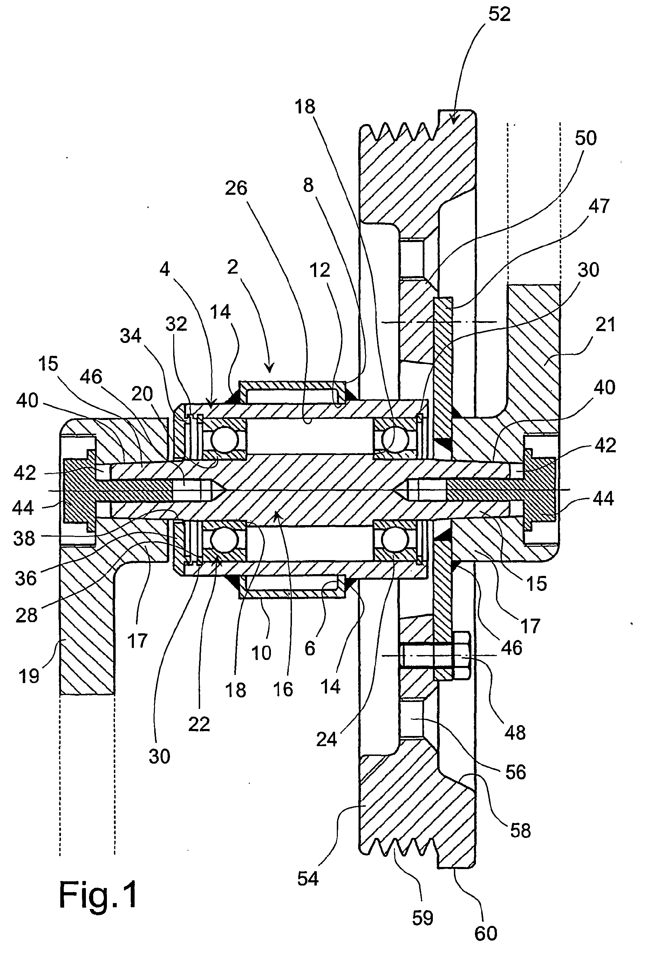

The present invention is associated with DK patent application PA 2000 01008 and is a further development of the bicycle crank described therein and shown in Fig. 1.

US-A-5 941 135 discloses a conventional bicycle crank assembly comprising two crank arms having end portions thereof, a crank axle having two end portions thereof, with one of the crank arms attached to one of the axle end portions and another of the crank arms attached to the other of the axle end portions, and a crank arm inserty affixed to at least one of the axle end portions and affixed to one of the crank arms end portions for connection of the crank arm to the crank axle.

Usually, bicycle cranks are designed out of a compromise as the bicycle crank is to fulfil certain criteria with respect to strength, durability and ability of transmitting maximum forces, including torque, from pedals to transmission and is not to constitute too great weight load of the bicycle construction as a whole. In practice, such a compromise almost always implies that bicycle cranks consist of very tiny constructions that easily become the "Achilles' heel" of the bicycle.

Furthermore, concerning stationary exercising bicycles where the mechanical loads on pedal and crank system may be extremely large, particularly in the case of so-called spinning, where one is to bring a flywheel to very great speed and to follow with at the same time as no coasting exist between pedals and flywheel, quite extraordinary demands on the strength of the bicycle crank are made if the producer is to give the usual periodical guarantee.

The invention has the purpose of indicating a new and improved bicycle crank which by means of simple measures enables achieving a bicycle crank which, particularly in connection with spinning, has completely optimal strength properties, and which furthermore is cheap to produce.

The bicycle crank according to the invention is characterised in, that the crankshaft is made in one piece with the drive belt pulley, and that the crankshaft within the end part is designed with fit faces and contact for inner rings of ball bearings, and that said left and right crank bearing housings have cylindrical borings in which outer rings of the ball bearings fit. By means of simple measures is hereby achieved a bicycle crank that may be produced with optimal strength, and which continuously can withstand much greater loads than prior art bicycle cranks.

The invention is explained in the following in connection with the drawing, on which:
- Fig. 1: shows a bicycle crank according to the introductory mentioned DK patent application PA 2000 01008,
- Fig. 2: shows a section of a preferred embodiment of a bicycle crank according to the present invention,
- Fig. 3: shows a perspective view of the preferred embodiment of the inventive bicycle crank in Fig. 2, mounted with cranks and pedal,
- Fig. 4: shows a perspective view of the bicycle crank in Fig. 3, as seen from the opposite side,
- Fig. 5: shows a perspective view of details at the building in of the inventive bicycle crank in Figs. 3 and 4, and
- Fig. 6: shows a perspective view of the details in Fig. 5 of a bicycle crank according to the present invention as seen from the opposite side.

The bicycle crank 2 shown in Fig. 1 comprises a crank housing 4 which is shaped as a body of revolution with an external annular abutment face 6, which is arranged to abut on a flat side 8 of a four-edged frame tube 10, as the crank housing 4 is embedded in a horizontal boring 12 in the frame tube 10, to which the crank housing 4 at both sides is welded by means of annular welds 14. It will be seen that the crank housing 4 for the side facing the drive system of the bicycle, i.e. to the right of the frame tube 10, has increased material thickness.

A through-going crankshaft 16 is suspended centrally through the crank housing 4, the shaft 16 being provided with protruding end parts 15 with connecting means for non-rotatable connection with basic parts 17 of cranks 19 and 21, and which at both sides of a central thickening is designed with annular abutment faces 18 for inner rings 20 of ball bearings 22, the outer rings 24 of which fit internally in a cylindrical boring 26 of the crank housing 4.

To the outside, the outer ring 24 of the ball bearings 22 are held firmly in the boring 26 by means of locking ring 28 that engage internal annular grooves 30 in the boring 26. At the side facing away from the drive system of the bicycle, i.e. to the left of the frame tube 10, this is furthermore provided with an internal annular groove 32 for accommodating internal holding fingers 34 of an end cover 36 which is preferably made of plastic, and which has a central opening 38 for the left end part 15 of the crankshaft 16.

The connecting means of the end parts 15 of the crankshaft 16 are preferably constituted by an edged cross-section of the end parts 15 and of complementarily shaped socket holes 40 of basic parts 17 of the cranks 19 and 21, as the basic parts 17 are also formed with through-going holes 42 for fastening screws 44 engaging threaded holes 46 in the end parts 15.

The basic part 17 of the right crank 21 is provided with a connecting disc 47 which welded with both an outer and an inner annular weld, and which furthermore is clamped by means of bolts 48 to a hub part 50 of a belt pulley 52. Between the hub part 50 and the outer part 54 of the belt pulley 52, there is bored a number of ventilation openings 56 that outwards have large chamfers. Internally, the outer part 54 of the belt pulley 52 is formed with slanting edges 58 with the purpose of ensuring that possible transpiration dripping down from the jogger is flung off the structure instead of running inwards and contributing to corrosion. Externally, the belt pulley 52 is designed with an integrated annular safety screen 60 for a profiled groove 59 for a not shown drive belt.

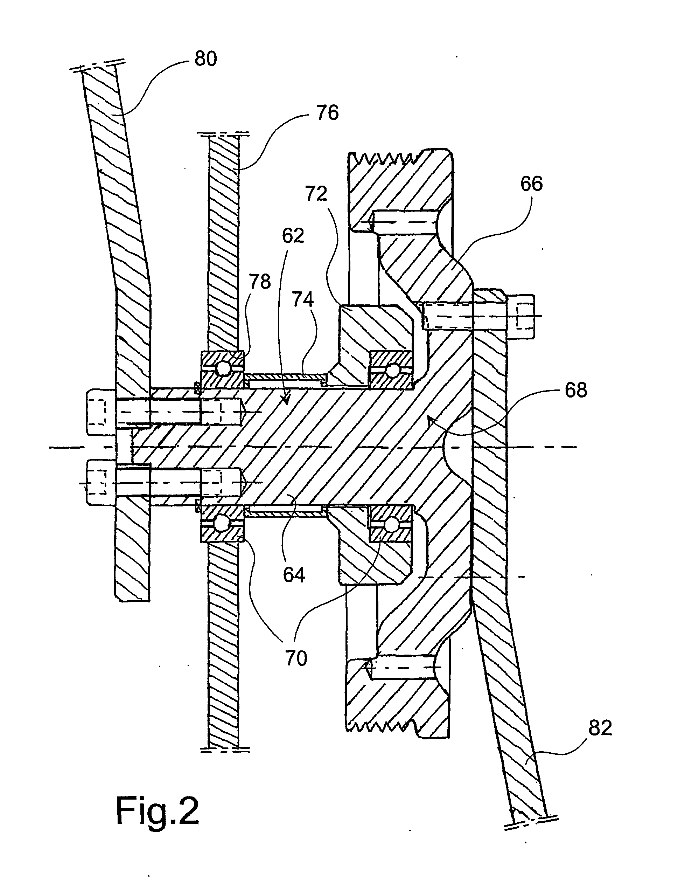

A preferred embodiment of a bicycle crank 62 according to the present invention is shown in Fig. 2 where crankshaft 64 and drive belt pulley 66 are constituted by one integrated, cast crank shaft member 68, which subsequently is worked by turning annular contact surfaces for ball bearings 70. A right crank bearing housing 72 is welded directly externally onto a vertical saddle tube 74, which at the opposite side has been welded with a bearing plate 76 for a left crank bearing housing 78, i.e. that a really durable construction has been provided.

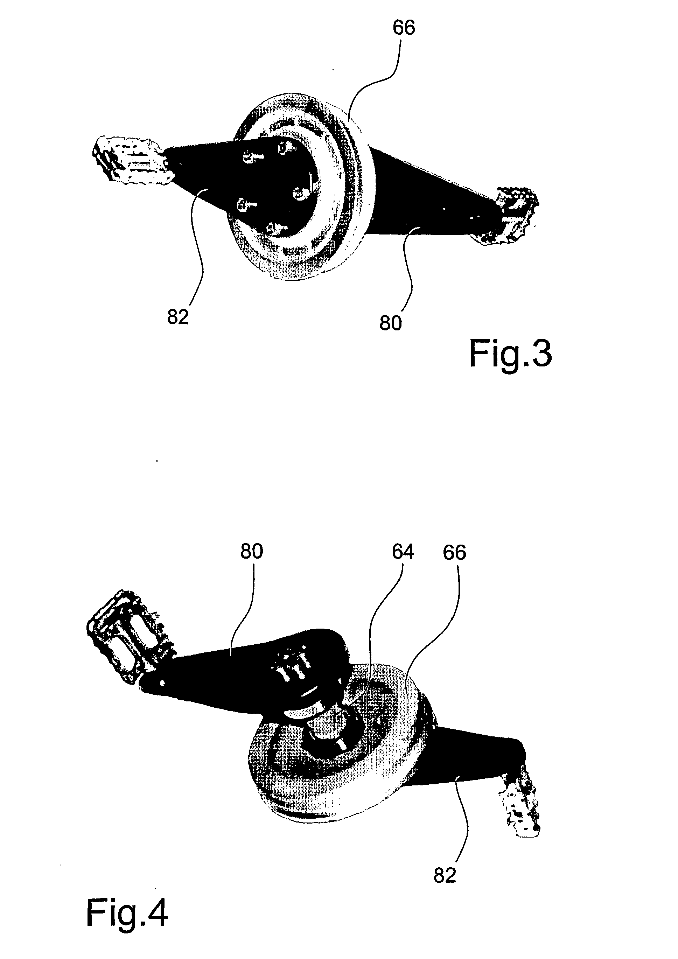

Figs. 3 and 4 show how very strong cranks 80 and 82 of profiled steel plate are clamped by means of strong Unbrako bolts directly onto the drive belt pulley 66 (Fig. 3) and an opposite end part of the crankshaft 64 of the crankshaft member 68, respectively.

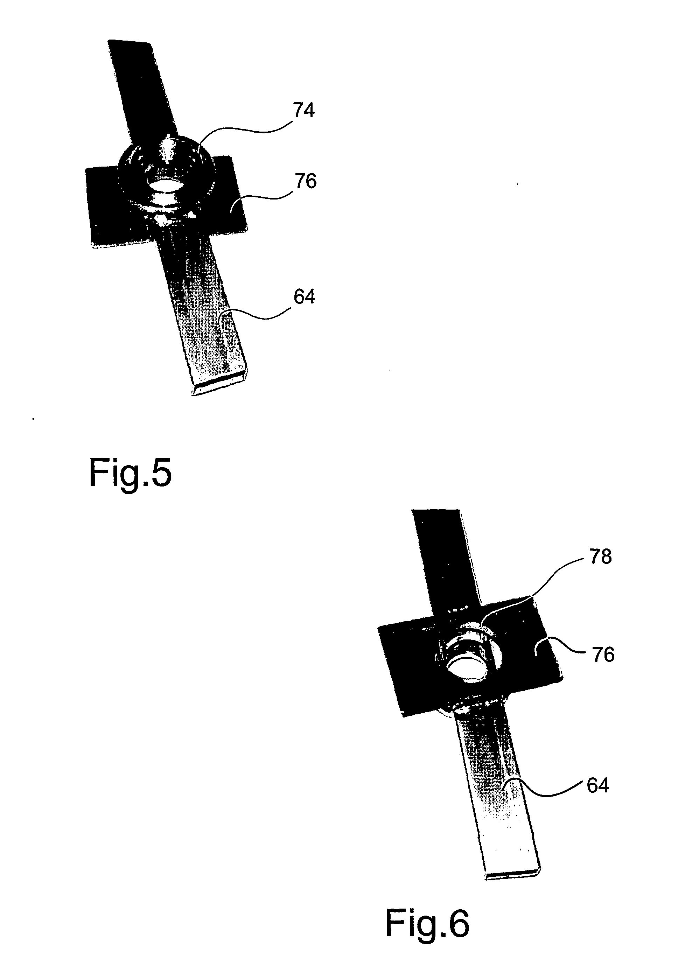

Figs. 5 and 6 show how the right crank bearing housing 72 is welded externally onto the saddle tube 74 (Fig. 5), whereas the left crank bearing housing 78 comprises a strong bearing plate which is welded onto the opposite side of the saddle tube 74.

## Claims

1. A bicycle crank (62) for an exercising bicycle including left and right crank bearing housings (72, 78) connected to a frame tube (74) of the frame of the exercising bicycle by welding, the bicycle crank (62) comprising a through-going crankshaft (64) which at one end is adapted for directly non-rotating connection with a basic part of a crank (80), and which at the opposite end is connected with a drive belt pulley (66) and a basic part for another crank (82), **characterised in that** the crankshaft (64) is made in one piece with the drive belt pulley (66), and that the crankshaft within the end part is designed with fit faces and contact for inner rings of ball bearings (70), and that said left and right crank bearing housings (72, 78) have cylindrical borings in which outer rings of the ball bearings (70) fit.

## Patentansprüche

1. Fahrradkurbel (62) für ein Trainingsfahrrad mit einem linken und einem rechten Kurbellagergehäuse (72, 78), welche mit einem Rahmenrohr (74) des Rahmens des Trainingsfahrrads mittels Schweißen verbunden sind, wobei die Fahrradkurbel (62) eine durchgehende Kurbelwelle (64) aufweist, welche an ihrem einen Ende für eine direkte nicht-drehende Verbindung mit einem Basisteil einer Kurbel (80) ausgebildet ist und welche an ihrem gegenüberliegenden Ende mit einer Antriebsscheibe (66) und einem Basisteil einer weiteren Kurbel (82) verbunden ist,
**dadurch gekennzeichnet,**
**dass** die Kurbelwelle (64) einstückig mit der Antriebsriemenscheibe (66) ausgebildet ist, dass die Kurbelwelle in einem Endbereich mit Lagersitzen zur Aufnahme von inneren Ringen von Kugellagern (70) versehen ist und dass die linken und rechten Kurbellagergehäuse (72, 78) zylindrische Bohrungen aufweisen, in welche äußere Ringe der Kugellager (70) passen.

## Revendications

1. Pédalier de bicyclette (62) pour une bicyclette d'exercice comprenant des logements de roulements de pédalier droit et gauche (72, 78) reliés à un tube de cadre (74) du cadre de la bicyclette d'exercice par soudage, le pédalier de bicyclette (62) comprenant un arbre de pédalier traversant (64) qui, à une première extrémité, est conçu en vue d'une connexion directe non tournante avec une partie élémentaire d'une pédale (80) et qui, à l'extrémité opposée, est relié à une poulie à courroie d'entraînement (66) et à une partie élémentaire pour une autre pédale (82), **caractérisé en ce que** l'arbre de pédalier (64) est fait en une seule pièce avec la poulie de courroie d'entraînement (66), et **en ce que** l'arbre de pédalier, à l'intérieur de la partie d'extrémité, est conçu avec des faces d'ajustement et un contact avec les bagues intérieures des roulements à billes (70), et **en ce que** lesdits logements de roulements de pédalier gauche et droit (72, 78) présentent des alésages cylindriques dans lesquels s'ajustent les bagues extérieures des roulements à billes (70).
